# FASCICULE DE BREVET EUROPEEN

(11) **EP 3 530 404 B1**
(45) Date de publication et mention de la délivrance du brevet: **29.04.2026**
(21) Numéro de dépôt: 19158761.7
(22) Date de dépôt: 22.02.2019
(51) Int. Cl.: B23Q 9/00, B23K 20/12

(54) **DISPOSITIF ET PROCÉDÉ D'USINAGE D'UNE EXTRÉMITÉ D'UN PANNEAU ÉLÉMENTAIRE EN VUE DE SON SOUDAGE PAR FRICTION MALAXAGE**
VORRICHTUNG UND VERFAHREN ZUR BEARBEITUNG EINER EXTREMITÄT EINES GRUNDPANEELS ALS VORBEREITUNG AUF SEINE BEARBEITUNG DURCH REIBRÜHRSCHWEISSVERFAHREN
DEVICE AND METHOD FOR MACHINING ONE END OF AN ELEMENTARY PANEL FOR ITS FRICTION STIR WELDING

(30) Priorité: 23.02.2018 FR 1851602
(43) Date de publication de la demande: 28.08.2019
(73) Titulaire: Airbus Atlantic, 17300 Rochefort (FR)
(72) Inventeur: CHARTIER, David, 31400 TOULOUSE (FR); DARRAS, Franck, 83300 MEAULTE (FR); WATTIEZ, Yannick, 59224 THIANT (FR)
(74) Mandataire: Argyma

(56) Documents cités:
- GB-A- 1 413 106
- JP-A- 2001 047 262
- JP-A- H1 052 773
- US-A- 5 971 247

## Description

### DOMAINE TECHNIQUE GENERAL ET ART ANTERIEUR

La présente invention concerne le domaine de la fabrication d'une structure aéronautique à partir de panneaux métalliques élémentaires qui sont assemblés par soudage, en particulier, par soudage par friction malaxage connu de l'homme du métier sous sa dénomination anglaise « Friction Stir Welding » ou « FSW ».

Afin de réaliser un soudage par friction malaxage, deux extrémités de panneaux métalliques élémentaires sont positionnées de manière adjacente puis un pion est entraîné en rotation à haute vitesse à l'interface entre les deux panneaux métalliques élémentaires afin de faire fondre localement la matière des extrémités des panneaux métalliques élémentaires et ainsi les souder.

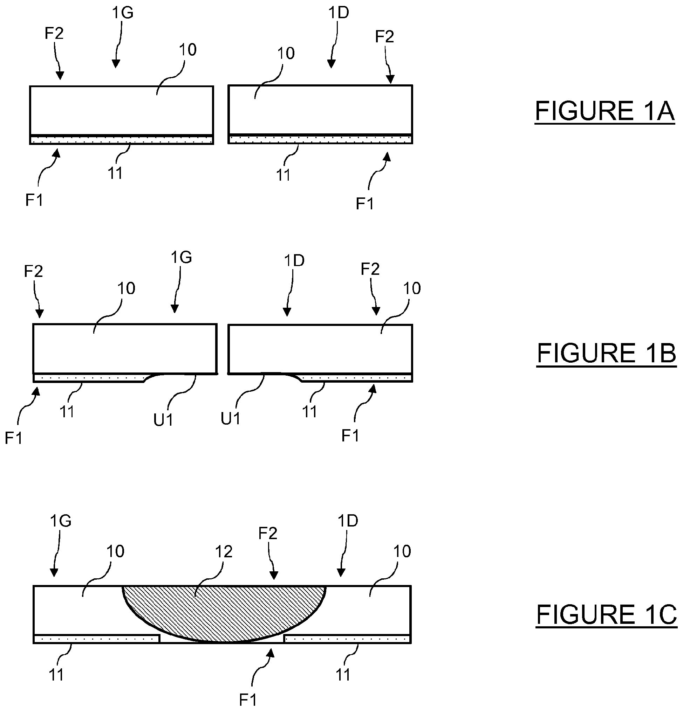

En pratique, les panneaux métalliques élémentaires ne peuvent pas être soudés directement après fabrication et il est nécessaire de les préparer préalablement au soudage. En référence à la figure 1A, il est représenté un panneau métallique élémentaire gauche 1G et un panneau métallique élémentaire droit 1D comportant chacun un corps central métallique 10, par exemple en aluminium. Dans cet exemple, chaque corps central métallique 10 comporte une face inférieure F1 avec un revêtement 11 et une face supérieure F2 qui en est dépourvu. A titre d'exemple, chaque revêtement 11 se présente sous la forme d'une épaisseur d'aluminium pur qui résulte du laminage du panneau élémentaire 1G, 1D.

Dans le cas d'un soudage par friction malaxage, un objectif est de retirer le revêtement 11 (appelé également « plaquage » ou « clading » en langue anglaise) afin que la matière du revêtement 11 ne se mélange pas avec la matière du corps central métallique 10 lors du soudage. De manière plus générale, le but est de maîtriser l'épaisseur de l'extrémité du panneau métallique à souder.

Aussi, une étape de préparation consiste à retirer localement l'épaisseur de revêtement 11 sur les extrémités des panneaux métalliques élémentaires 1G, 1D à souder. Cette étape est connue de l'homme du métier sous sa dénomination de « décladage ». L'étape de décladage est complexe car elle impose de retirer l'épaisseur du revêtement 11 avec une précision élevée. En effet, si l'épaisseur retirée est trop faible, le revêtement 11 n'est pas entièrement retiré et la matière du revêtement 11 est susceptible de se mélanger avec la matière du corps central métallique 10, ce qui dégraderait les qualités du cordon de soudure. Au contraire, si l'épaisseur retirée est trop élevée, l'épaisseur du corps central métallique 10 peut alors être trop faible et inférieure à la longueur du pion de friction. Le cordon de soudure ne présente pas alors des qualités optimales.

Afin de retirer le revêtement 11 de manière précise au moyen d'un outil d'usinage, il est nécessaire de réaliser une étape de mesure précise de la position de chaque panneau métallique élémentaire 1G, 1D. Cette étape de mesure est réalisée par contact. En pratique, un outil de mesure réalise une première passe de mesure en suivant une trajectoire théorique prédéterminée le long de l'extrémité de chaque panneau métallique élémentaire 1G, 1D afin de déterminer l'écart vertical entre la trajectoire théorique et le profil réel de ladite extrémité. Grâce à la trajectoire théorique et à l'écart vertical, une trajectoire corrigée est calculée. Une nouvelle étape de mesure par contact peut être réalisée en fonction de la trajectoire corrigée afin de détecter un éventuel nouvel écart vertical. L'étape de mesure est stoppée lorsque la dernière trajectoire corrigée est identique au profil réel, c'est-à-dire, lorsque l'écart vertical est nul. Une fois l'étape de mesure terminée, le revêtement 11 est retiré U1 à l'extrémité de chaque panneau élémentaire 1G, 1D par un outil d'usinage utilisant la dernière trajectoire corrigée (Figure 1B). Puis les panneaux élémentaires 1G, 1D sont aboutés et soudés ensemble par friction malaxage. Après soudage, les panneaux élémentaires 1G, 1D sont solidarisés par un cordon de soudure 12 comme illustré à la figure 1C.

Les étapes de mesure sont contraignantes car elles sont très longues et onéreuses étant donné qu'elles sont réalisées manuellement par des opérateurs. En outre, une telle étape de mesure ne possède pas une fiabilité optimale pour répondre au niveau d'exigence de plus en plus élevé. Même si une automatisation de l'étape de mesure était réalisée, elle ne permettrait pas de répondre aux exigences de fiabilité.

L'invention a donc pour but de remédier à ces inconvénients en proposant un dispositif et un procédé d'usinage d'une extrémité d'un panneau métallique aéronautique en vue de son soudage par friction malaxage.

Bien que l'invention soit née à l'origine pour un panneau élémentaire comportant un revêtement, l'invention s'applique à tout panneau élémentaire pour lequel on souhaite retirer de l'épaisseur d'au moins une face d'une extrémité dudit panneau élémentaire.

Le document GB1413106 A concerne un dispositif pour travailler sur différentes parties longitudinales d'une pièce allongée (barre métallique, feuille, etc.), en particulier, à plusieurs positions longitudinales différentes. Le but du dispositif est de réaliser des opérations différentes à plusieurs positions longitudinales de manière automatique. Un tel dispositif est incapable de retirer une épaisseur de manière précise. Le dispositif n'est aucunement adapté pour usiner une extrémité d'un panneau élémentaire afin de retirer une épaisseur d'une de ses faces.

Le document JP H10 52773 A concerne un dispositif d'assemblage par friction malaxage FSW. Le dispositif n'est aucunement adapté pour usiner une extrémité d'un panneau élémentaire afin de retirer une épaisseur d'une de ses faces.

### PRESENTATION GENERALE DE L'INVENTION

A cet effet, l'invention concerne un dispositif d'usinage tel que défini dans la revendication 1.

Grâce au dispositif d'usinage selon l'invention, le panneau élémentaire est guidé de manière précise dans le référentiel du dispositif d'usinage. Il n'est plus ainsi nécessaire de mesurer de manière préalable la position du panneau élémentaire, ce qui augmente la fiabilité tout en procurant un gain de temps. L'utilisation d'organes de guidage et de pression permet de contraindre localement le panneau élémentaire afin que celui-ci s'étende dans un plan prédéterminé lors de son usinage. Ainsi, même si le panneau élémentaire comporte globalement une ou plusieurs courbures, celui-ci est déformé localement pour s'étendre parfaitement selon la direction horizontale de référence. Cela permet de retirer de manière précise une épaisseur de la première face étant donné qu'elle s'étend selon la direction horizontale de référence.

De préférence, la direction horizontale de référence est définie entre les deux sommets des organes de guidage.

De préférence, le dispositif d'usinage comprend deux organes de pression, chaque organe de pression étant monté de manière symétrique à un organe de guidage par rapport à la direction horizontale de référence de manière à prendre le panneau élémentaire en sandwich. Le panneau élémentaire est ainsi parfaitement maintenu entre deux points de référence. A chaque point de référence, un organe de guidage coopère avec un organe de pression pour bloquer tout débattement du panneau élémentaire.

Le dispositif d'usinage est configuré pour se déplacer d'amont en aval, le dispositif d'usinage comporte deux organes de guidage amont et deux organes de guidage aval. De préférence encore, le dispositif d'usinage comporte deux organes de pression amont et deux organes de pression aval. Cela permet avantageusement d'augmenter la précision du positionnement de l'outil d'usinage en évitant toutes déformations du panneau élémentaire. En effet, le panneau est maintenu entre quatre points de référence interdisant toute déviation locale.

De manière préférée, chaque organe de pression est mobile par rapport à la direction horizontale de référence. Ainsi, chaque organe de pression permet d'adapter la contrainte lorsque l'épaisseur du panneau élémentaire varie sur sa longueur. Selon l'invention, chaque organe de guidage est fixe par rapport à la direction horizontale de référence. Autrement dit, même si l'organe de guidage est apte à tourner sur un axe pour guider le panneau élémentaire, sa position reste fixe par rapport à la direction horizontale de référence pour définir un référentiel stable dans le dispositif d'usinage.

Selon un aspect, la dimension latérale des organes de guidage, définie orthogonalement à la direction horizontale de référence, est plus grande que la dimension latérale d'usinage de l'outil d'usinage de manière à permettre un guidage optimal de la portion usinée par les organes de guidage. Autrement dit, les organes de guidage en aval de l'outil d'usinage demeurent en contact avec une portion non usinée de l'extrémité du panneau élémentaire afin d'éviter tout défaut de positionnement. L'outil d'usinage est aligné avec les organes de guidage selon la direction horizontale de référence.

Selon un autre aspect, l'outil d'usinage est décalé latéralement par rapport à la direction horizontale de référence définie par les organes de guidage de manière à ce que les organes de guidage n'entrent pas en contact avec une portion usinée de l'extrémité du panneau élémentaire lors du déplacement du dispositif d'usinage.

De préférence, les organes de guidage sont écartés selon la direction horizontale d'une distance entre 50mm et 150mm, de préférence, entre 60mm et 150mm. Un tel écartement permet de réaliser un guidage de grande précision à proximité de l'outil d'usinage.

Seul le châssis est configuré pour être déplacé lors d'un usinage, la position relative de l'outil d'usinage par rapport aux organes de guidage étant définie de manière déterminée et précise. Autrement dit, la position de l'outil d'usinage demeure fixe dans le référentiel des organes de guidage, ce qui permet de ne pas tenir compte du référentiel global de l'outil d'usinage. Le châssis peut ainsi suivre le profil de l'extrémité du panneau. Lors du positionnement des organes de guidage, l'outil d'usinage est obligatoirement dans la bonne position d'usinage. La précision est très importante, ce qui est très avantageux pour une opération de décladage afin de retirer une épaisseur calibrée.

De manière préférée, le dispositif d'usinage comprend au moins un organe de soufflage configuré pour évacuer les copeaux d'usinage à distance des organes de guidage et/ou de pression. Un tel organe de soufflage permet d'éviter que des copeaux d'usinage ne se déposent entre le panneau élémentaire et un organe de pression ou de guidage, ce qui affecterait le positionnement du panneau élémentaire dans le dispositif d'usinage et donc la précision d'usinage.

De préférence encore, le dispositif d'usinage comprend au moins un organe de balayage configuré pour balayer au moins une face du panneau élémentaire. Un tel organe de balayage permet de capter tout copeau d'usinage reposant sur le panneau élémentaire de manière à conserver une précision d'usinage importante. De manière préférée, l'organe de balayage est positionné entre l'outil d'usinage et un organe de guidage. Ainsi, l'organe de guidage ne peut pas être plaqué contre un copeau d'usinage qui affecterait le positionnement.

L'utilisation d'organes de soufflage/aspiration/balayage permettent de traiter les copeaux d'usinage tout en conservant une vitesse d'avancée importante.

Le châssis comporte une partie inférieure et une partie supérieure dont l'écartement vertical est réglable, les organes de guidage sont montés sur la partie inférieure tandis que l'outil d'usinage est monté sur la partie supérieure du châssis. Ainsi, la hauteur d'usinage est définie avec une précision très élevée.

Selon un aspect préféré, le châssis comporte une base mobile configurée pour permettre la rotation du dispositif d'usinage autour d'un axe vertical. Ainsi, l'outil d'usinage peut tourner de 180° afin de permettre un usinage d'un panneau élémentaire gauche puis d'un panneau élémentaire droit. Bien qu'assurant une précision élevée, le dispositif d'usinage demeure pratique à utiliser afin de pouvoir souder des panneaux élémentaires ensemble.

L'invention concerne également un système d'usinage et de soudage d'une extrémité d'un panneau élémentaire, le système d'usinage et de soudage comportant au moins un dispositif de support d'au moins un panneau élémentaire, un dispositif de déplacement d'une unité fonctionnelle par rapport au dispositif de support et un dispositif d'usinage tel que présenté précédemment, le dispositif d'usinage étant connecté à l'unité fonctionnelle de manière à permettre le retrait d'une épaisseur d'au moins une face d'un panneau élémentaire monté sur un dispositif de support.

De manière avantageuse, le système d'usinage et de soudage permet de positionner de manière précise le panneau élémentaire puis de déplacer le dispositif d'usinage le long de son extrémité afin de retirer une épaisseur de matière.

Selon un aspect préféré, le système d'usinage et de soudage comprend deux dispositifs de support et un dispositif de soudage par friction malaxage connecté à l'unité fonctionnelle de manière à permettre le soudage par friction malaxage des extrémités des panneaux élémentaires montés sur les dispositifs de support. Ainsi, les dispositifs de support permettent de supporter les panneaux élémentaires lors de l'usinage puis lors du soudage par friction malaxage. Les étapes d'usinage et de soudage peuvent être réalisées de manière consécutive, ce qui améliore la qualité de liaison des panneaux élémentaires.

L'invention concerne en outre un procédé d'usinage d'une extrémité d'un panneau élémentaire en vue de son soudage par friction malaxage tel que défini à la revendication 9.

Grâce à l'invention, le panneau élémentaire est contraint dans le référentiel d'usinage du dispositif d'usinage, évitant ainsi de recourir à une étape de mesure de position chronophage et imprécise.

De préférence, le panneau élémentaire est plaqué au voisinage de l'extrémité du panneau élémentaire à usiner. L'extrémité du panneau élémentaire s'étend en porte-à-faux lors de l'usinage.

De manière préférée, au moins une face du panneau élémentaire est recouverte d'un revêtement et le dispositif d'usinage est déplacé par rapport au panneau élémentaire selon la direction horizontale de référence de manière à usiner le revêtement. De préférence, la première face du panneau élémentaire est usinée car sa position est déterminée avec une grande précision par les organes de guidage.

De préférence, le procédé comporte une étape de soudage par friction malaxage de deux panneaux élémentaires après usinage. Les panneaux élémentaires sont usinés individuellement puis aboutés afin d'être soudés par friction malaxage.

Comme l'étape d'usinage est réalisée de manière précise, la qualité du soudage par friction malaxage est optimale.

### PRESENTATION DES FIGURES

L'invention sera mieux comprise à la lecture de la description qui va suivre, donnée uniquement à titre d'exemple, et se référant aux dessins annexés sur lesquels :
- La figure 1A est une vue en coupe des extrémités de panneaux élémentaires aéronautiques préalablement à une étape de décladage,
- La figure 1B est une vue en coupe des extrémités de panneaux élémentaires aéronautiques postérieurement à une étape de décladage,
- La figure 1C est une vue en coupe des extrémités de panneaux élémentaires après soudage par friction malaxage,
- La figure 2 est vue en perspective d'un système d'usinage et de soudage selon une forme de réalisation de l'invention,
- La figure 3 est une vue de face d'un dispositif d'usinage selon une forme de réalisation de l'invention,
- La figure 4 est une vue de l'arrière du dispositif d'usinage de la figure 3,
- La figure 5 est vue en perspective du dispositif d'usinage de la figure 3,
- La figure 6 est une vue zoomée d'un organe de pression du dispositif d'usinage de la figure 5,
- La figure 7 est une vue en coupe horizontale du dispositif d'usinage de la figure 3,
- La figure 8 est une vue schématique du positionnement de l'outil d'usinage par rapport à la direction horizontale de référence,
- La figure 9 est une vue de côté d'une étape de retrait d'un revêtement d'un panneau élémentaire par le dispositif d'usinage selon une forme de réalisation de l'invention
- La figure 10 est une vue en perspective de l'étape de retrait de la figure 9,
- La figure 11 est une vue de dessus de l'usinage d'un panneau élémentaire gauche puis d'un panneau élémentaire droit,
- La figure 12 est une vue de dessus du soudage des panneaux élémentaires de la figure 11, et
- La figure 13 est une vue de dessus des panneaux élémentaires soudés de la figure 12.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

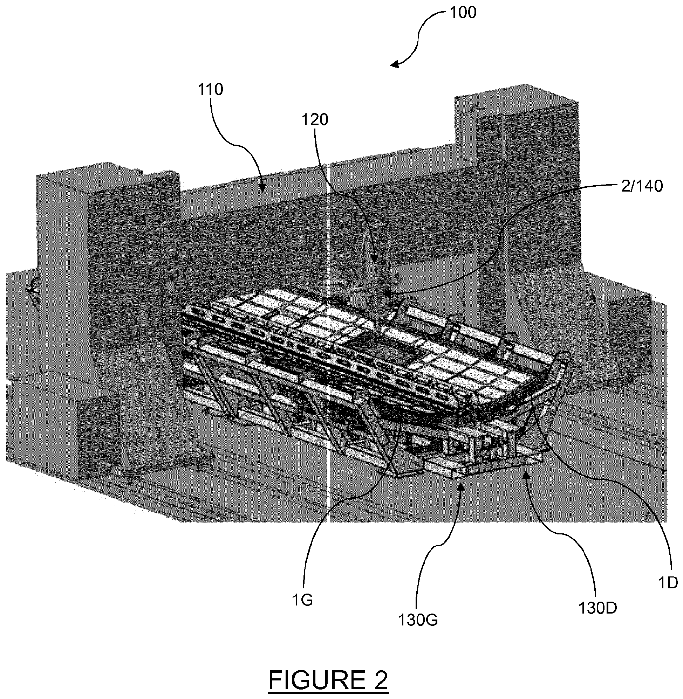

En référence à la figure 2, il est représenté un système d'usinage et de soudage 100 de deux panneaux élémentaires 1G, 1D.

Le système d'usinage et de soudage 100 comporte un dispositif de support gauche 130G sur lequel est positionné un panneau élémentaire gauche 1G et un dispositif de support droite 130D sur lequel est positionné un panneau élémentaire droite 1D.

Comme illustré à la figure 1A, un panneau élémentaire 1G, 1D comporte un corps métallique 10 définissant deux faces opposées F1, F2 dont au moins une face est recouverte d'un revêtement 11 à retirer. Dans cet exemple, le corps métallique 10 est réalisé en alliage d'aluminium et possède une épaisseur comprise entre 1mm et 3mm. Le revêtement 11 est réalisé en aluminium pur et possède une épaisseur comprise entre 0,1mm et 0,3mm. De manière préférée, le revêtement 11 possède une épaisseur constante. Le corps métallique 10 possède pour sa part une épaisseur qui peut varier le long de l'extrémité du panneau 1G, 1D. Comme indiqué précédemment, le revêtement 11 doit être retiré de manière précise à l'extrémité du panneau 1G, 1D afin de garantir une soudure de qualité optimale. Du fait de sa finesse, un tel panneau élémentaire 1G, 1D demeure flexible et peut être mis à plat par déformation plastique même si ce dernier comporte une ou plusieurs courbures.

L'invention va être présentée pour un panneau élémentaire 1G, 1D comportant un revêtement à retirer sur première face F1 mais l'invention vise également un panneau élémentaire 1G, 1D ne comportant pas de revêtement et pour lequel on souhaite retirer une épaisseur d'une face du corps métallique 10.

Le système d'usinage et de soudage 100 comporte un dispositif de déplacement 110 qui se présente dans cet exemple sous la forme d'un portique de déplacement comme illustré à la figure 2. Le dispositif de déplacement 110 comporte une unité fonctionnelle 120 sur laquelle peuvent être montés différents dispositifs, en particulier, un dispositif d'usinage 2 et un dispositif de soudage par friction malaxage 140. L'unité fonctionnelle 120 permet avantageusement de fournir de l'énergie électrique, mécanique, hydraulique, pneumatique aux dispositifs connectés.

Comme cela sera présenté par la suite, le dispositif de déplacement 110 permet, d'une part, de déplacer le dispositif d'usinage 2 pour retirer le revêtement à l'extrémité de chaque panneau élémentaire 1G, 1D et, d'autre part, de déplacer le dispositif de soudage par friction malaxage pour solidariser ensemble les panneaux élémentaires 1G, 1D. Autrement dit, grâce au système d'usinage et de soudage 100, deux panneaux élémentaires 1G, 1D sont soudés de manière rapide et pratique.

Dans cet exemple, en référence à la figure 2, les dispositifs de support 130G, 130D sont configurés pour supporter fixement les panneaux élémentaires 1G, 1D tout en maintenant son extrémité à usiner en porte-à-faux de manière à faciliter le passage du dispositif d'usinage 2.

Grâce au système d'usinage et de soudage 100 selon l'invention, le dispositif d'usinage 2 se positionne de manière précise par rapport à un panneau élémentaire 1G, 1D qui est maintenu fixement puis le dispositif d'usinage 2 est déplacé le long d'une extrémité du panneau élémentaire 1G, 1D afin de l'usiner de manière précise.

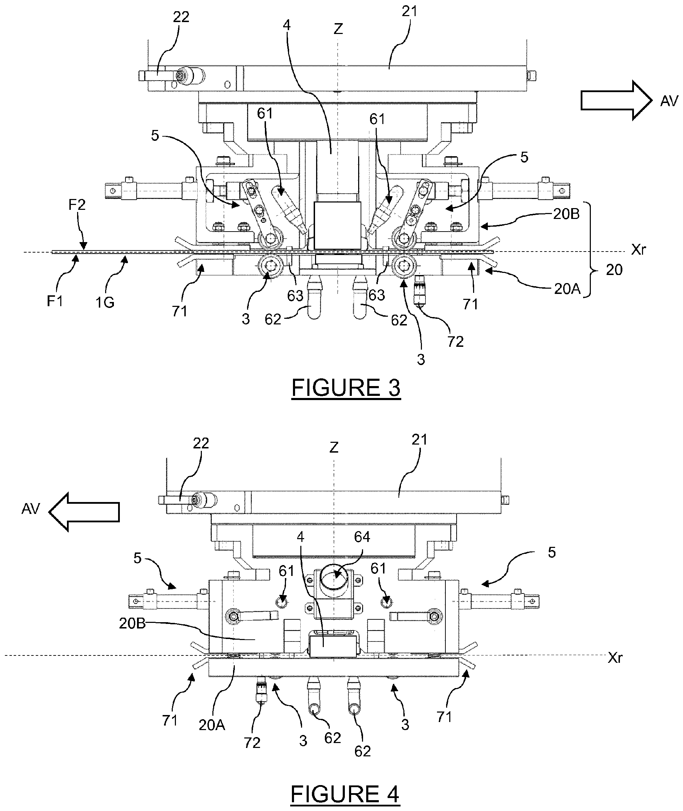

En référence aux figures 3 à 10, il est présenté un dispositif d'usinage 2 selon une forme de réalisation de l'invention pour usiner une extrémité d'un panneau élémentaire gauche 1G en vue de son soudage par friction malaxage.

Comme illustré aux figures 3 et 4, le dispositif d'usinage 2 comporte un châssis 20 et deux organes de guidage 3, montés sur le châssis 20, et alignés selon une direction horizontale de référence Xr, les organes de guidage 3 étant configurés pour guider une première face F1 d'un panneau élémentaire 1G afin de définir précisément sa position. Le dispositif d'usinage 2 comporte en outre un outil d'usinage 4 monté sur le châssis 20, l'outil d'usinage 4 étant positionné entre les deux organes de guidage 3 à une position verticale déterminée par rapport à la direction horizontale de référence Xr afin de retirer au moins le revêtement 11 du panneau élémentaire 1G. Toujours en référence à la figure 3, le dispositif d'usinage 2 comporte deux organes de pression 5 configurés pour exercer une pression sur la deuxième face F2 de panneau élémentaire 1G de manière à plaquer le panneau élémentaire 1G contre les organes de guidage 3.

Grâce à un tel dispositif d'usinage 2, un panneau élémentaire 1G est positionné de manière précise et fiable dans le référentiel du dispositif d'usinage 2, ce qui garantit un usinage de très grande précision garantissant un soudage par friction malaxage optimal.

Les différents organes du dispositif d'usinage 2 vont être dorénavant présentés de manière individuelle.

Comme illustré à la figure 4, le châssis 20 du dispositif d'usinage 2 permet de supporter les différents organes comme cela sera présenté par la suite.

Dans cet exemple, le châssis 20 comporte une partie inférieure 20A sur laquelle sont montés les organes de guidage 3 et une partie supérieure 20B sur laquelle est monté l'outil d'usinage 4. La distance verticale entre la partie inférieure 20A et la partie supérieure 20B est réglable, en particulier au moyen d'un vernier 72 ou d'une butée micrométrique, ce qui permet de régler de manière indirecte la position verticale de l'outil d'usinage 4 par rapport à la direction horizontale de référence Xr. Un tel réglage offre une précision importante. A titre d'exemple, une erreur de positionnement inférieure à 0,05mm peut être obtenue.

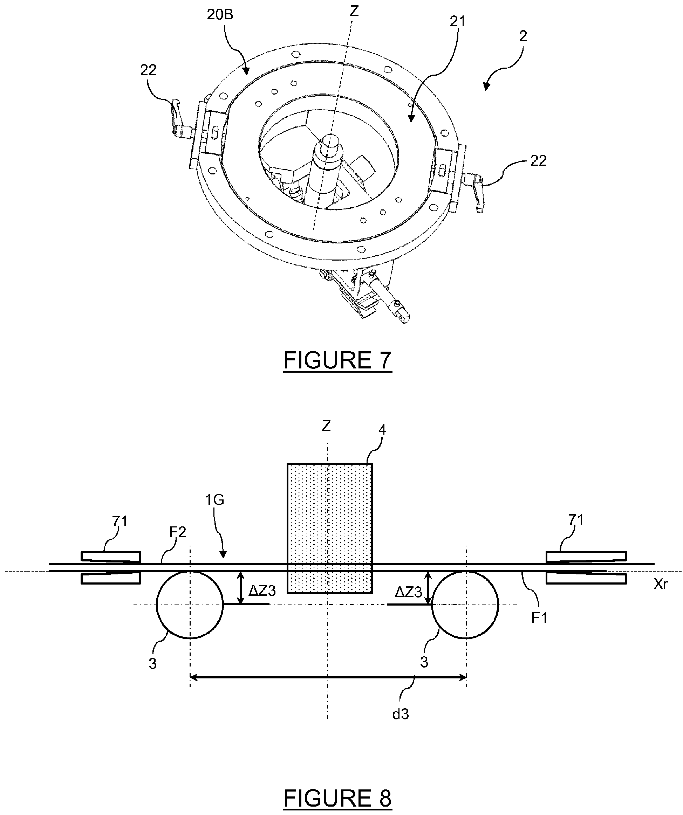

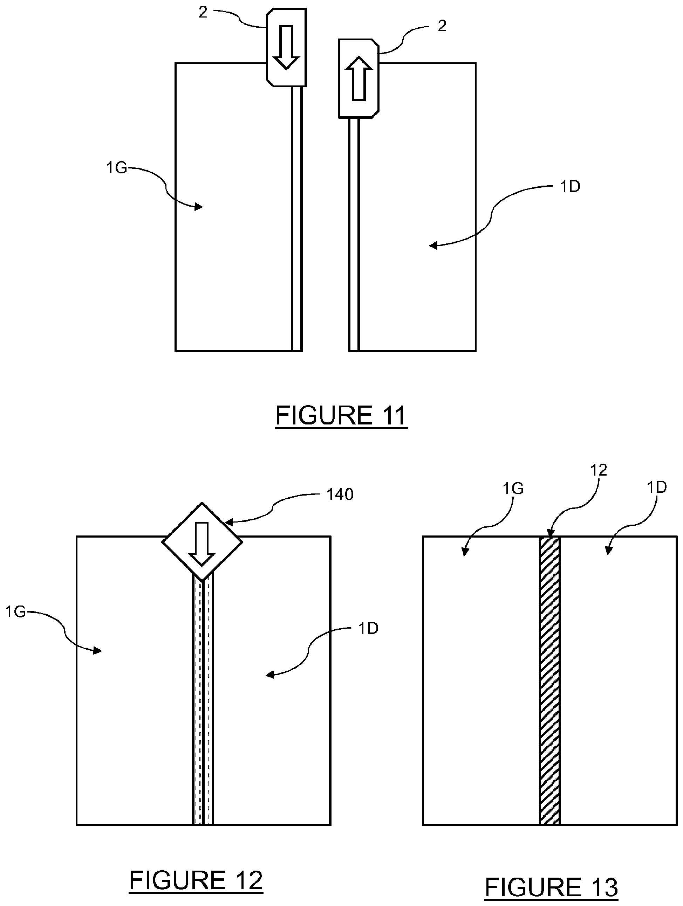

Dans cet exemple, en référence à la figure 7, le châssis 20 comporte une base mobile 21 configurée pour permettre la rotation du dispositif d'usinage 2 autour d'un axe vertical Z. La base mobile 21 peut pivoter par rapport à la partie supérieure 20B du châssis 20 autour d'un axe vertical Z afin de modifier l'orientation du dispositif d'usinage 2 pour usiner aussi bien un panneau élémentaire gauche 1G qu'un panneau élémentaire droit 1D comme illustré à la figure 11. Dans cet exemple, le dispositif d'usinage 2 peut tourner de 180°. En référence à la figure 7, le châssis 20 comporte des mors de serrage 22 afin de maintenir fixement la base mobile 21 par rapport à la partie supérieure 20B dans les deux configurations d'utilisation, les mors de serrage 22 étant desserrés pour changer de configuration.

Comme illustré aux figures 3 et 4, le dispositif d'usinage 2 comporte deux organes de guidage 3 configurés pour guider une première face F1 du panneau élémentaire 1G, dans cet exemple, la face inférieure F1. Chaque organe de guidage 3 se présente chacun sous la forme de rouleaux afin de permettre un guidage en roulant sans risque de marquer/rayer la face inférieure F1 du panneau élémentaire 1G.

Les organes de guidage 3 sont montés sur le châssis 20 et alignés selon une direction horizontale de référence Xr. Les organes de guidage 3 sont mobiles en rotation de manière à permettre un guidage roulant selon la direction horizontale de référence Xr. Ainsi, les organes de guidage 3 forment un référentiel propre au châssis 20. De manière préférée, comme illustré à la figure 8, la direction horizontale de référence est définie au sommet des organes de guidage 3. La précision ΔZ3 entre le centre d'un organe de guidage 3 et la direction horizontale de référence Xr est inférieure à 0,05mm comme illustré à la figure 8. De manière préférée, chaque organe de guidage 3 est rigide de manière à offrir une tolérance de positionnement la plus faible possible. Chaque organe de guidage 3 possède de préférence un revêtement extérieur en polymère pour limiter le risque de marquage du panneau élémentaire 1G.

De manière préférée, en référence à la figure 8, les organes de guidage 3 sont écartés selon la direction horizontale d'une distance d3 qui doit être minimale pour assurer un maintien performant tout en étant suffisamment grande pour réserver un espace de travail pour l'outil d'usinage 4 entre les organes de guidage 3 et éviter l'insertion de copeaux. De manière préférée, pour un outil d'usinage 4 ayant un diamètre de 50mm, une distance d3 comprise entre 50mm et 150mm est adaptée, de préférence, entre 60mm et 150mm. Un tel écartement est faible au regard du rayon de courbure d'un panneau élémentaire 1G, ce qui permet de considérer que le panneau élémentaire 1 est localement plan entre les organes de guidage 3 lorsqu'il est plaqué contre les organes de guidage 3.

Par la suite, il est considéré que le dispositif d'usinage 2 se déplace selon la flèche AV, c'est-à-dire, de la gauche vers la droite sur la figure 3. L'organe de guidage 3, situé le plus à gauche, est désigné « organe de guidage amont » tandis que l'organe de guidage 3, situé le plus à droite, est désigné « organe de guidage aval ». Les termes amont et aval sont définis par rapport à la direction horizontale de référence.

Afin de retirer le revêtement 11 à l'extrémité du panneau élémentaire 1G, le dispositif d'usinage 2 comporte un outil d'usinage 4 monté sur le châssis 20, en particulier, sur sa partie supérieure 20B. Comme illustré à la figure 3, l'outil d'usinage 4 est positionné entre les deux organes de guidage 3 à une position verticale déterminée par rapport à la direction horizontale de référence Xr. La position verticale de l'outil d'usinage 4 est simple à garantir étant donné qu'elle est définie par réglage de la distance verticale entre la partie inférieure 20A et la partie supérieure 20B du châssis 20. Contrairement à l'art antérieur qui imposait de détecter préalablement la position du panneau élémentaire 1G de manière très précise, le panneau élémentaire 1 est guidé dans le référentiel du châssis 20 pour lequel la position de l'outil d'usinage 4 est parfaitement définie. La fiabilité de l'usinage est ainsi grandement améliorée.

Dans cet exemple, l'outil d'usinage 4 comprend une surface d'usinage pour usiner une face inférieure mais peut également comprendre d'autres surfaces d'usinage pour usiner une face supérieure et/ou une face latérale (flanc) de l'extrémité du panneau élémentaire 1G. Ainsi, l'outil d'usinage 4 permet de réaliser un usinage complet de l'extrémité du panneau élémentaire 1G. A titre d'exemple, l'outil d'usinage 4 est entraîné en rotation selon la direction verticale à une vitesse de rotation comprise 2000 à 4000 tr/min.

De manière préférée, la dimension latérale des organes de guidage 3, définie orthogonalement à la direction horizontale de référence Xr, est plus grande que la dimension latérale d'usinage de l'outil d'usinage 4 de manière à permettre un guidage optimal de la portion usinée par les organes de guidage 3. A titre d'exemple, la largeur des organes de guidage 3 est de 10 mm tandis que la dimension latérale d'usinage est de l'ordre de 3mm. Ainsi, les organes de guidage 3 en aval de l'outil d'usinage 4 demeurent en contact avec une portion non usinée de l'ordre de 7mm de l'extrémité du panneau élémentaire 1G afin d'éviter tout défaut de positionnement. L'outil d'usinage 4 est aligné avec les organes de guidage 3 selon la direction horizontale de référence Xr.

De manière alternative, l'outil d'usinage 4 est décalé latéralement par rapport à la direction horizontale de référence Xr définie par les organes de guidage 3 de manière à ce que les organes de guidage 3 soient décalés par rapport à la portion usinée de l'extrémité du panneau élémentaire 1G lors du déplacement du dispositif d'usinage 2.

Comme indiqué précédemment, toujours en référence à la figure 3, le dispositif d'usinage 2 comporte deux organes de pression 5 configurés pour exercer une pression sur la deuxième face F2 du panneau élémentaire 1G de manière à plaquer le panneau élémentaire 1G contre les organes de guidage 3. Afin de réaliser un guidage optimal, les organes de pression 5 sont alignés verticalement avec les organes de guidage 3. L'organe de pression 5, situé le plus à gauche, est désigné « organe de pression amont » tandis que l'organe de pression 5, situé le plus à droite, est désigné « organe de pression aval ».

Ainsi, l'extrémité du panneau élémentaire 1G est prise en sandwich en deux positions horizontales différentes, en amont et en aval de l'outil d'usinage 4, afin de garantir un alignement de l'extrémité du panneau élémentaire 1G avec la direction horizontale de référence Xr par rapport à laquelle l'outil d'usinage 4 est positionné avec une grande précision.

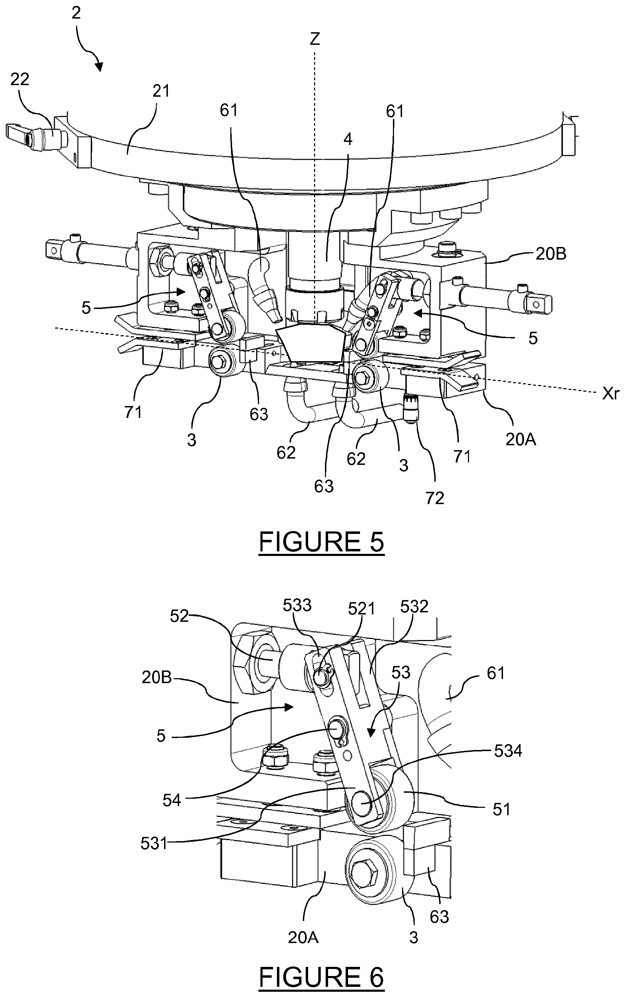

Dans cette forme de réalisation, les organes de pression 5 sont identiques. Par souci de clarté et de concision, seul l'organe de pression amont 5 va être présenté en référence aux figures 5 et 6.

En référence à la figure 6, l'organe de pression amont 5 comporte un rouleau 51 afin de permettre un guidage en tournant sans risque de marquer/rayer la face supérieure F2 du panneau 1. De manière analogue à un organe de guidage 3, le rouleau 51 est rigide de manière à offrir une tolérance de positionnement la plus faible possible et possède de préférence un revêtement extérieur en polymère pour limiter le risque de marquage du panneau élémentaire 1G. L'organe de pression amont 5 comporte en outre un vérin 52 pour exercer une contrainte verticale descendante en direction de l'organe de guidage amont 3. Dans cet exemple, le vérin 52 est relié au rouleau 51 par un mécanisme 53 permettant de réaliser une course de déplacement incurvée. Néanmoins, il va de soi que le vérin 52 pourrait être relié directement au rouleau 51.

Comme illustré à la figure 6, le vérin 52 de l'organe de pression amont 5 s'étend horizontalement et comporte, au niveau de sa tête, un pion 521 qui est relié au mécanisme 53. Le mécanisme 53 se présente sous la forme d'une pièce longitudinale comportant une extrémité inférieure 531 reliée au rouleau 51 par une liaison pivot 534 et une extrémité supérieure 532 comportant une fente longitudinale 533 dans laquelle peut se déplacer le pion 521 du vérin 52 selon une liaison du type pivot-glissant. La pièce longitudinale formant le mécanisme 53 est articulée à la partie supérieure 20B du châssis 20 autour d'un axe 54. Ainsi, l'organe de pression amont 5 réalise un serrage/desserrage du panneau élémentaire 1G en réalisant une cinématique selon un arc de cercle, ce qui permet d'exercer une pression verticale graduelle et contrôlée sur la face supérieure F2 du panneau élémentaire 1G.

Pour serrer un panneau élémentaire 1G, en référence à la figure 6, le vérin 52 se détend vers la droite et le pion 521 pénètre dans la fente longitudinale 533 pour entraîner le mécanisme 53 en rotation dans le sens horaire autour de l'axe 54, ce qui déplace le rouleau 51 vers le bas contre le panneau élémentaire 1G selon une trajectoire en arc de cercle. A l'inverse, pour desserrer un panneau élémentaire 1G, le vérin 52 se contracte vers la gauche et le pion 521 remonte dans la fente longitudinale 533 pour l'entraîner en rotation dans le sens antihoraire autour de l'axe 54, ce qui déplace le rouleau 51 verticalement vers le haut à distance du panneau élémentaire 1G selon une trajectoire en arc de cercle.

De manière avantageuse, chaque organe de pression 5 comporte un élément de régulation de pression, de préférence intégré au vérin 52, afin de calibrer la pression appliquée au panneau élémentaire 1G lors du serrage. Un tel élément de régulation de pression permet d'appliquer une pression sensiblement constante même lorsque l'épaisseur du panneau élémentaire 1G n'est pas constante. Ainsi, en cas de surépaisseur, le rouleau 51 de l'organe de pression 5 est plus haut et la pression est adaptée pour réaliser un plaquage optimal du panneau élémentaire 1G. De préférence, l'élément de régulation de pression se présente sous la forme d'une unité de calcul électronique qui est reliée fonctionnellement au vérin 52. De manière préférée, la force de pression exercée par un organe de pression 5 est comprise entre 10N et 300N, en particulier, inférieure à 150N. Il va de soi qu'un organe de pression pourrait appliquer une force de pression plus élevée, en particulier, jusqu'à 5000N.

Il a été présenté deux organes de guidage 3 associés à deux organes de pression 5 (un jeu en amont et un jeu en aval) mais il va de soi qu'un nombre plus élevé d'organes de guidage 3 et d'organes de pression 5 pourrait convenir. En particulier, quatre organes de guidage 3 associés à quatre organes de pression 5 (deux jeux en amont et deux jeux en aval) permettent d'optimiser le contrôle dimensionnel du panneau élémentaire 1G pour améliorer la précision du positionnement de l'outil d'usinage 4, évitant notamment que le panneau élémentaire 1G soit bombé.

En référence à la figure 3, le dispositif d'usinage 2 comporte deux organes d'alignement global 71, en particulier du type avaloir. De manière analogue à précédemment, le dispositif d'usinage 2 comporte un organe d'alignement global amont 71 placé en amont de l'organe de guidage amont 3 et un organe d'alignement global aval 71 placé en aval de l'organe de guidage aval 3. Des organes d'alignement global 71 permettent de réaliser un centrage de l'extrémité d'un panneau élémentaire 1G préalablement à l'usinage. Ainsi, le panneau élémentaire 1G est contraint de manière progressive pour contrôler précisément la position du panneau élémentaire 1G dans le référentiel du dispositif d'usinage 2.

Les organes d'alignement global 71 sont alignés selon la direction horizontale de référence Xr. Chaque organe d'alignement global 71 possède une forme convergente selon la direction horizontale de référence Xr en direction de l'outil d'usinage 4. De tels organes d'alignement global 71 permettent de guider de manière globale l'extrémité du panneau élémentaire 1G avant de réaliser un guidage contraint à proximité immédiate de l'outil d'usinage 4 avec les organes de guidage 3 et les organes de pression 5. Dans cet exemple, chaque organe d'alignement global 71 comporte deux tôles obliques mais il va de soi qu'un ou plusieurs rouleaux pourraient également convenir.

Toujours en référence à la figure 3, le dispositif d'usinage 2 comporte également deux organes de soufflage supérieur 61, en particulier, un organe de soufflage supérieur 61 placé en amont de l'outil d'usinage 4 et un organe de soufflage supérieur 61 placé en aval de l'outil d'usinage 4. Les organes de soufflage supérieur 61 permettent de souffler de l'air sur la face supérieure F2 du panneau élémentaire 1G. Ainsi, les copeaux métalliques générés lors de l'usinage sont soufflés à distance des organes de pression 5 de manière à éviter toute surépaisseur locale pouvant affecter le positionnement du panneau élémentaire 1G ou une dégradation du référentiel. De manière préférée, chaque organe de soufflage supérieur 61 est placé entre l'outil d'usinage 4 et l'organe de pression 5 afin d'éviter que des copeaux d'usinage n'entrent en contact avec l'organe de pression 5.

De manière analogue, toujours en référence à la figure 3, le dispositif d'usinage 2 comporte également deux organes de soufflage inférieur 62, en particulier, un organe de soufflage inférieur 62 placé en amont de l'outil d'usinage 4 et un organe de soufflage inférieur 62 placé en aval de l'outil d'usinage 4. Les organes de soufflage inférieur 62 permettent de souffler de l'air sur la face inférieure F1 du panneau élémentaire 1G. Ainsi, les copeaux métalliques générés lors de l'usinage sont soufflés à distance des organes de guidage 3 de manière à éviter toute surépaisseur locale pouvant affecter le positionnement du panneau élémentaire 1G ou une dégradation du référentiel. De manière préférée, chaque organe de soufflage inférieur 62 est placé entre l'outil d'usinage 4 et l'organe de guidage 3 afin d'éviter que des copeaux d'usinage n'entrent en contact avec l'organe de guidage 3.

De tels organes de soufflage 61, 62 permettent également d'éviter un marquage du panneau élémentaire 1G par les copeaux d'usinage.

De manière préférée, les copeaux d'usinage sont collectés par aspiration. A cet effet, en référence à la figure 4, le dispositif d'usinage 2 comporte un organe d'aspiration 64, à proximité de l'outil d'usinage 4, afin d'aspirer les copeaux. Les organes de soufflage supérieur 61 sont inclinés vers l'outil d'usinage 4 de manière à faciliter une aspiration centrale par l'organe d'aspiration 64. Ainsi, la direction horizontale de référence Xr est protégée au cours de l'usinage pour éviter toute déviation et garantir un usinage de précision.

De préférence, comme illustré à la figure 3, le dispositif d'usinage 2 comporte également deux organes de balayage 63, en particulier, un organe de balayage amont 63 placé en amont de l'outil d'usinage 4 et un organe de balayage aval 63 placé en aval de l'outil d'usinage 4. Les organes de balayage 63 sont alignés selon la direction horizontale de référence Xr. Dans cet exemple, chaque organe de balayage 63 est configuré pour balayer la face inférieure F1 et la face supérieure F2 du panneau élémentaire 1G. Néanmoins, il va de soi qu'un organe de balayage 63 pourrait balayer uniquement une face du panneau élémentaire 1G. Ainsi, les copeaux métalliques générés lors de l'usinage sont balayés pour ne pas entrer en contact avec les organes de pression 5 et les organes de guidage 3 de manière à éviter toute surépaisseur locale pouvant affecter l'orientation de la direction horizontale de référence Xr. Ainsi, la direction horizontale de référence Xr est protégée au cours de l'usinage pour éviter toute déviation et garantir un usinage de précision.

De manière optionnelle, le dispositif d'usinage 2 comporte une ou plusieurs sondes de mesure de l'épaisseur du panneau élémentaire 1G, 1D après usinage de son extrémité afin de permettre de réaliser un contrôle de qualité. Une sonde de mesure du type laser est préférée.

De manière préférée, le dispositif d'usinage 2 est monté sur une unité fonctionnelle 120 du système d'usinage et de soudage 100 présenté à la figure 2. Le dispositif de déplacement 110 est relié à la base mobile 21 du châssis 20 du dispositif d'usinage 2 et permet de le déplacer, notamment selon une ligne sensiblement droite de manière à suivre l'extrémité à usiner du panneau élémentaire 1G.

En référence à la figure 11, il est représenté une vue de dessus d'un panneau élémentaire gauche 1G et d'un panneau élémentaire droit 1D dont le revêtement 11 doit être usiné (opération de décladage). Dans cette mise en œuvre, le dispositif d'usinage 2 est déplacé le long du panneau élémentaire gauche 1G puis le dispositif d'usinage 2 est tourné de 180° avant d'être déplacé le long du panneau élémentaire droit 1D.

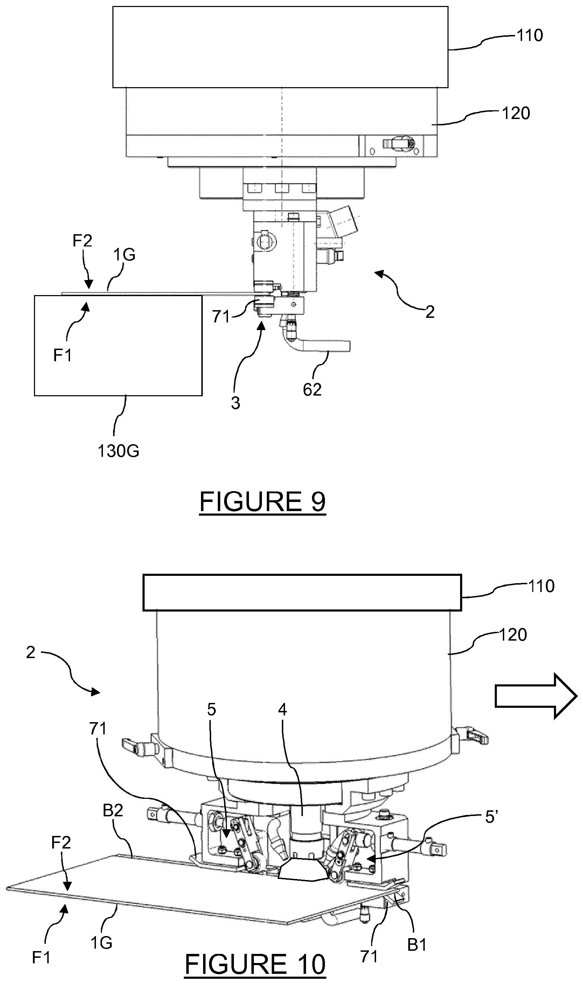

Le procédé d'usinage du panneau élémentaire gauche 1G va être dorénavant présenté en référence aux figures 9 et 10.

A la manière d'une machine à coudre, le panneau élémentaire gauche 1G se déplace relativement au dispositif d'usinage 2 lors du déplacement de l'unité fonctionnelle 120 par le dispositif de déplacement 110. L'extrémité du panneau élémentaire gauche 1G est centrée par les organes d'alignement global 71 puis les organes de guidage 3 et les organes de pression 5 contraignent localement le panneau élémentaire gauche 1G afin que son extrémité soit localement plane entre les deux zones de contrainte. Du fait de sa faible épaisseur, cette déformation plastique n'affecte pas le panneau élémentaire gauche 1G même si ce dernier comporte une ou plusieurs courbures.

L'extrémité du panneau élémentaire gauche 1G est maintenue à proximité de la zone à usiner qui s'étend en porte-à-faux afin de permettre de ménager de l'espace pour l'outil d'usinage 4.

Contrairement à l'art antérieur, il n'est pas nécessaire de connaître la position absolue du panneau élémentaire gauche 1G, le dispositif d'usinage 2 suit avantageusement l'extrémité du panneau élémentaire gauche 1G pour être positionné de manière rigoureuse. En effet, les organes de guidage 3 et les organes de pression 5 définissent, deux à deux, deux positions de référence le long de la direction horizontale de référence Xr de manière à maitriser parfaitement la position du panneau élémentaire gauche 1. Comme l'outil d'usinage 4 est positionné entre ces deux positions de référence, sa position est définie de manière très précise, ce qui garantit un usinage de haute précision.

L'outil d'usinage 4 est entraîné en rotation et le dispositif d'usinage 2 est déplacé à une vitesse d'avancement comprise entre 150 à 800 mm/min. Au fur et à mesure du déplacement du dispositif d'usinage 2, le revêtement 11 du panneau élémentaire gauche 1 est retiré de manière précise. Les copeaux d'usinage sont soufflés, balayés et/ou aspirés pour ne pas perturber l'usinage ni perturber le maintien du panneau élémentaire gauche 1G entre les deux positions de référence, ce qui garantit une précision importante. En fonction de la forme de l'outil d'usinage 4, la face inférieure F1, la face supérieure F2 et/ou la face latérale de l'extrémité du panneau élémentaire gauche 1G sont usinées afin que ce dernier soit apte à être soudé par friction malaxage.

Comme illustré à la figure 11, une fois le panneau élémentaire gauche 1G décladé, les mors de serrage 22 de la base mobile 21 sont desserrés afin de modifier l'orientation du dispositif d'usinage 2 qui peut alors usiner le panneau élémentaire droit 1D de manière analogue au panneau élémentaire gauche 1G.

Après usinage des deux panneaux 1G, 1D, le dispositif d'usinage 2 est déconnecté de l'unité fonctionnelle 120 et remplacé par un dispositif de soudage par friction malaxage 140 comme illustré à la figure 12. Les dispositifs de support 130G, 130D sont réglés de manière à abouter les extrémités des panneaux élémentaires 1G, 1D comme illustré à la figure 12. Puis, le dispositif de soudage par friction malaxage 140 est activé et déplacé par le dispositif de déplacement 110 à l'interface entre les panneaux élémentaires 1G, 1D de manière à les souder ensemble de manière optimale. Les panneaux élémentaires 1G, 1D sont reliés par un cordon de soudure 12 comme illustré à la figure 13.

Il va de soi que le système d'usinage et de soudage 100 pourrait également comprendre plusieurs unités fonctionnelles 120 de manière à disposer de manière concomitante du dispositif d'usinage 2 et du dispositif de soudage par friction malaxage 140.

Grâce au système d'usinage et de soudage 100 selon l'invention, les panneaux élémentaires 1G, 1D sont usinés de manière pratique avec une précision importante. En outre, l'intégration dans un même système d'un dispositif d'usinage 2 et d'un dispositif de soudage 140 permet d'obtenir une productivité importante tout en limitant le nombre de manipulation des panneaux élémentaires.

La suppression des étapes répétitives de mesure par contact permet de gagner un temps important tout en augmentant la fiabilité et en réduisant les coûts.

## Revendications

1. Dispositif d'usinage (2) d'une extrémité d'un panneau élémentaire (1G, 1D) en vue de son soudage par friction malaxage, le panneau élémentaire (1G, 1D) comportant un corps métallique (10) définissant deux faces opposées (F1, F2), le dispositif d'usinage (2) comportant :
- un châssis (20),
- au moins deux organes de guidage (3), montés sur le châssis (20), et alignés selon une direction horizontale de référence (Xr), chaque organe de guidage (3) étant fixe par rapport à la direction horizontale de référence (XR), les organes de guidage (3) étant configurés pour guider une première face (F1) du panneau élémentaire (1G, 1D),
- au moins un outil d'usinage (4) monté sur le châssis (20), l'outil d'usinage (4) étant positionné entre les deux organes de guidage (3) par rapport à la direction horizontale de référence (Xr) et à une position verticale déterminée par rapport à la direction horizontale de référence (Xr) afin de retirer une épaisseur d'au moins une face (F1, F2) du panneau élémentaire (1G, 1D), et
- au moins un organe de pression (5) monté sur le châssis (20) et configuré pour exercer une pression sur une deuxième face (F2) du panneau élémentaire (1G, 1D) de manière à plaquer le panneau élémentaire (1G, 1D) contre les organes de guidage (3) selon la direction horizontale de référence (Xr), seul le châssis (20) étant configuré pour être déplacé lors d'un usinage , la position relative de l'outil d'usinage (4) par rapport aux organes de guidage (3) étant définie de manière déterminée et précise, le châssis (20) comprenant une partie inférieure (20A) sur laquelle sont montés les organes de guidage (3) et une partie supérieure (20B) sur laquelle est monté l'outil d'usinage (4), la distance verticale entre la partie inférieure (20A) et la partie supérieure (20B) étant réglable.

2. Dispositif d'usinage (2) selon la revendication 1, comprenant deux organes de pression (5), chaque organe de pression (5) étant monté de manière symétrique à un organe de guidage (3) par rapport à la direction horizontale de référence (Xr) de manière à prendre le panneau élémentaire (1G, 1D) en sandwich.

3. Dispositif d'usinage (2) selon l'une des revendications 1 à 2, comprenant au moins un organe de soufflage (61, 62) configuré pour évacuer les copeaux d'usinage à distance des organes de guidage (3) et/ou de pression (5).

4. Dispositif d'usinage (2) selon l'une des revendications 1 à 3, comprenant au moins un organe de balayage (63) configuré pour balayer au moins une face (F1, F2) du panneau élémentaire (1G, 1D).

5. Dispositif d'usinage (2) selon l'une des revendications 1 à 4, dans lequel le châssis (20) comporte une base mobile (21) configurée pour permettre la rotation du dispositif d'usinage (2) autour d'un axe vertical (Z).

6. Dispositif d'usinage (2) selon l'une des revendications 1 à 5, dans lequel les organes de guidage (3) sont écartés selon la direction horizontale d'une distance d3 entre 50mm et 150mm, de préférence, entre 60mm et 150mm.

7. Système d'usinage et de soudage (100) d'une extrémité d'un panneau élémentaire (1G, 1D), le système d'usinage et de soudage (100) comportant au moins un dispositif de support (130G, 130D) d'au moins un panneau élémentaire (1G, 1D), un dispositif de déplacement (110) d'une unité fonctionnelle (120) par rapport au dispositif de support (130G, 130D) et un dispositif d'usinage (2) selon l'une des revendications 1 à 6, le dispositif d'usinage (2) étant connecté à l'unité fonctionnelle (120) de manière à permettre le retrait d'une épaisseur d'au moins une face d'un panneau élémentaire (1G, 1D) monté sur un dispositif de support (130G, 130D).

8. Système d'usinage et de soudage (100) selon la revendication précédente, comprenant deux dispositifs de support (130G, 130D) et un dispositif de soudage par friction malaxage (140) connecté à l'unité fonctionnelle (120) de manière à permettre le soudage par friction malaxage des extrémités des panneaux élémentaires (1G, 1D) montés sur les dispositifs de support (130G, 130D).

9. Procédé d'usinage d'une extrémité d'un panneau élémentaire (1G, 1D) en vue de son soudage par friction malaxage au moyen d'un dispositif d'usinage (2) selon l'une des revendications 1 à 6, le panneau élémentaire (1G, 1D) comportant un corps métallique (10) définissant deux faces opposées (F1, F2), la première face (F1) du panneau élémentaire (1G, 1D) est en appui sur les organes de guidage (3), le procédé comportant :
- Une étape de pression de l'organe de pression (5) sur la deuxième face (F2) du panneau élémentaire (1G, 1D) de manière à plaquer le panneau élémentaire (1G, 1D) contre les organes de guidage (3) selon la direction horizontale de référence (Xr),
- Une étape de mise en rotation de l'outil d'usinage (4) autour d'un axe vertical (Z),
- Une étape de déplacement du châssis (20) du dispositif d'usinage (2) par rapport au panneau élémentaire (1G, 1D) selon la direction horizontale de référence (Xr) de manière à retirer une épaisseur d'au moins une face (F1, F2) du panneau élémentaire (1G, 1D)

10. Procédé d'usinage selon la revendication 9, dans lequel, au moins une face du panneau élémentaire (1G, 1D) est recouverte d'un revêtement (11), le dispositif d'usinage (2) est déplacé par rapport au panneau élémentaire (1G, 1D) selon la direction horizontale de référence (Xr) de manière à usiner le revêtement (11).

11. Procédé d'usinage selon l'une des revendications 9 et 10, le procédé comportant une étape de soudage par friction malaxage de deux panneaux élémentaires (1G, 1D) après usinage.

## Patentansprüche

1. Vorrichtung (2) zur Bearbeitung eines Endes einer elementaren Platte (1G, 1D) im Hinblick auf sein Reibrührschweißen, wobei die elementare Platte (1G, 1D) einen Metallkörper (10) aufweist, der zwei gegenüberliegende Flächen (F1, F2) definiert, wobei die Bearbeitungsvorrichtung (2) aufweist:
- einen Rahmen (20),
- mindestens zwei Führungselemente (3), die am Rahmen (20) angebracht und gemäß einer horizontalen Referenzrichtung (Xr) ausgerichtet sind, wobei jedes Führungselement (3) in Bezug auf die horizontale Referenzrichtung (XR) feststehend ist, wobei die Führungselemente (3) ausgelegt sind, um eine erste Fläche (F1) der elementaren Platte (1G, 1D) zu führen,
- mindestens ein Bearbeitungswerkzeug (4), das am Rahmen (20) angebracht ist, wobei das Bearbeitungswerkzeug (4) zwischen den beiden Führungselementen (3) in Bezug auf die horizontale Referenzrichtung (Xr) und in einer bestimmten vertikalen Position in Bezug auf die horizontale Referenzrichtung (Xr) positioniert ist, um eine Dicke von mindestens einer Fläche (F1, F2) der elementaren Platte (1G, 1D) abzutragen, und
- mindestens ein Druckelement (5), das am Rahmen (20) angebracht und ausgelegt ist, um einen Druck auf eine zweite Fläche (F2) der elementaren Platte (1G, 1D) derart auszuüben, dass die elementare Platte (1G, 1D) gemäß der horizontalen Referenzrichtung (Xr) gegen die Führungselemente (3) gedrückt wird, wobei nur der Rahmen (20) ausgelegt ist, um während einer Bearbeitung bewegt zu werden, wobei die relative Position des Bearbeitungswerkzeugs (4) in Bezug auf die Führungselemente (3) auf bestimmte und präzise Weise definiert ist, wobei der Rahmen (20) einen unteren Teil (20A), an dem die Führungselemente (3) angebracht sind, und einen oberen Teil (20B) umfasst, an dem das Bearbeitungswerkzeug (4) angebracht ist, wobei der vertikale Abstand zwischen dem unteren Teil (20A) und dem oberen Teil (20B) einstellbar ist.

2. Bearbeitungsvorrichtung (2) nach Anspruch 1, umfassend zwei Druckelemente (5), wobei jedes Druckelement (5) symmetrisch zu einem Führungselement (3) in Bezug auf die horizontale Referenzrichtung (Xr) derart angebracht ist, dass die elementare Platte (1G, 1D) sandwichartig umschlossen wird.

3. Bearbeitungsvorrichtung (2) nach einem der Ansprüche 1 bis 2, umfassend mindestens ein Blaselement (61, 62), das ausgelegt ist, um die Bearbeitungsspäne von dem Führungs- (3) und/oder Druckelement (5) beabstandet zu entfernen.

4. Bearbeitungsvorrichtung (2) nach einem der Ansprüche 1 bis 3, umfassend mindestens ein Abstreifelement (63), das ausgelegt ist, um mindestens eine Fläche (F1, F2) der elementaren Platte (1G, 1D) abzustreifen.

5. Bearbeitungsvorrichtung (2) nach einem der Ansprüche 1 bis 4, wobei der Rahmen (20) eine bewegliche Basis (21) aufweist, die ausgelegt ist, um die Drehung der Bearbeitungsvorrichtung (2) um eine vertikale Achse (Z) zu gestatten.

6. Bearbeitungsvorrichtung (2) nach einem der Ansprüche 1 bis 5, wobei die Führungselemente (3) gemäß der horizontalen Richtung in einem Abstand d3 zwischen 50 mm und 150 mm, vorzugsweise zwischen 60 mm und 150 mm, beabstandet sind.

7. Bearbeitungs- und Schweißsystem (100) für ein Ende einer elementaren Platte (1G, 1D), wobei das Bearbeitungs- und Schweißsystem (100) mindestens eine Haltevorrichtung (130G, 130D) für mindestens eine elementare Platte (1G, 1D), eine Bewegungsvorrichtung (110) für eine Funktionseinheit (120) in Bezug auf die Haltevorrichtung (130G, 130D) und eine Bearbeitungsvorrichtung (2) nach einem der Ansprüche 1 bis 6 aufweist, wobei die Bearbeitungsvorrichtung (2) mit der Funktionseinheit (120) derart verbunden ist, dass das Abtragen einer Dicke von mindestens einer Fläche einer auf einer Haltevorrichtung (130G, 130D) angebrachten elementaren Platte (1G, 1D) möglich ist.

8. Bearbeitungs- und Schweißsystem (100) nach vorhergehendem Anspruch, umfassend zwei Haltevorrichtungen (130G, 130D) und eine Reibrührschweißvorrichtung (140), die mit der Funktionseinheit (120) derart verbunden ist, dass das Reibrührschweißen der Enden der auf den Haltevorrichtungen (130G, 130D) angebrachten elementaren Platten (1G, 1D) möglich ist.

9. Verfahren zur Bearbeitung eines Endes einer elementaren Platte (1G, 1D) im Hinblick auf sein Reibrührschweißen mittels einer Bearbeitungsvorrichtung (2) nach einem der Ansprüche 1 bis 6, wobei die elementare Platte (1G, 1D) einen Metallkörper (10) aufweist, der zwei gegenüberliegende Flächen (F1, F2) definiert, wobei die erste Fläche (F1) der elementaren Platte (1G, 1D) auf den Führungselementen (3) aufliegt, wobei das Verfahren umfasst:
- einen Schritt, bei dem das Druckelement (5) auf die zweite Fläche (F2) der elementaren Platte (1G, 1D) derart gedrückt wird, dass die elementare Platte (1G, 1D) gemäß der horizontalen Referenzrichtung (Xr) gegen die Führungselemente (3) gedrückt wird,
- einen Schritt, bei dem das Bearbeitungswerkzeug (4) um eine vertikale Achse (Z) gedreht wird,
- einen Schritt, bei dem der Rahmen (20) der Bearbeitungsvorrichtung (2) in Bezug auf die elementare Platte (1G, 1D) gemäß der horizontalen Referenzrichtung (Xr) derart bewegt wird, dass eine Dicke von mindestens einer Fläche (F1, F2) der elementaren Platte (1G, 1D) abgetragen wird.

10. Bearbeitungsverfahren nach Anspruch 9, wobei mindestens eine Fläche der elementaren Platte (1G, 1D) mit einer Beschichtung (11) bedeckt ist, die Bearbeitungsvorrichtung (2) in Bezug auf die elementare Platte (1G, 1D) gemäß der horizontalen Referenzrichtung (Xr) derart bewegt wird, dass die Beschichtung (11) bearbeitet wird.

11. Bearbeitungsverfahren nach einem der Ansprüche 9 und 10, wobei das Verfahren einen Schritt des Reibrührschweißens von zwei elementaren Platten (1G, 1D) nach der Bearbeitung umfasst.

## Claims

1. Device (2) for the machining of an end of an elementary panel (1G, 1D) for the purpose of its subsequent friction stir welding, the elementary panel (1G, 1D) comprising a metal body (10) defining two opposite faces (F1, F2), the machining device (2) comprising:
- a chassis (20),
- at least two guiding members (3), mounted on the chassis (20) and aligned along a horizontal reference direction (Xr), each guide member (3) being fixed with respect to the horizontal reference direction (XR), the guiding members (3) being configured to guide a first face (F1) of the elementary panel (1G, 1D),
- at least one machining tool (4) mounted on the chassis (20), the machining tool (4) being positioned between the two guiding members (3) with respect to the horizontal reference direction (Xr) and to a vertical position determined with respect to the horizontal reference direction (Xr) in order to remove a thickness of at least one face (F1, F2) of the elementary panel (1G, 1D), and
- at least one pressure member (5) mounted on the chassis (20) and configured to exert a pressure on a second face (F2) of the elementary panel (1G, 1D) so as to press the elementary panel (1G, 1D) against the guiding members (3) along the horizontal reference direction (Xr), only the chassis (20) being configured to be moved during machining, the relative position of the tool of machining (4) with respect to the guide members (3) being defined in such a way determined and precise, the chassis (20) comprising a lower part (20A) on which are mounted the guide members (3) and an upper part (20B) on which the machining tool (4) is mounted, the vertical distance between the part lower (20A) and the upper part (20B) being adjustable.

2. Machining device (2) according to claim 1, comprising two pressure members (5), each pressure member (5) being mounted symmetrically to a guiding member (3) with respect to the horizontal reference direction (Xr), so as to sandwich the elementary panel (1G, 1D).

3. Machining device (2) according to one of the claims 1 to 2, comprising at least one blowing member (61, 62) configured to evacuate the machining chips away from the guiding (3) and/or pressure (5) members.

4. Machining device (2) according to one of the claims 1 to 3, comprising at least one sweeping member (63) configured to sweep at least one face (F1, F2) of the elementary panel (1G, 1D).

5. Machining device (2) according to one of the claims 1 to 4 wherein the chassis (20) comprises a mobile base (21) configured to enable the rotation of the machining device (2) about a vertical axis (Z).

6. Machining device (2) according to one of the claims 1 to 5, wherein the guiding members (3) are spaced along the horizontal direction by a distance d3 ranging from 60mm to 150mm.

7. System (100) for machining and welding an end of an elementary panel (1G, 1D), the machining and welding system (100) comprising at least one device (130G, 130D) for supporting at least one elementary panel (1G, 1D), a device (110) for displacing a functional unit (120) with respect to the support device (130G, 130D) and a machining device (2) according to claims 1 to 6, the machining device (2) being connected to the functional unit (120) to enable the removal of a thickness from at least one face of an elementary panel (1G, 1D) mounted on a support device (130G, 130D).

8. Machining and welding system (100) according to the preceding claim, comprising two support devices (130G, 130D) and a friction stir welding device (140) connected to the functional unit (120) so as to enable the friction stir welding of the ends of the elementary panels (1G, 1D) mounted on the support devices (130G, 130D).

9. Process for machining an end of an elementary panel (1G, 1D) for its subsequent friction stir welding by means of a machining device (2) according to one of the claims 1 to 6, the elementary panel (1G, 1D) comprising a metal body (10) defining two opposite faces (F1, F2), the first face (F1) of the elementary panel (1G, 1D) bearing against the guiding members (3), the process comprising:
- A step whereby pressure is exerted by the pressure member (5) on the second face (F2) of the elementary panel (1G, 1D) so as to press the elementary panel (1G, 1D) against the guiding members (3) along the horizontal reference direction (Xr),
- A step whereby the machining tool (4) is rotationally driven about a vertical axis (Z),
- A step whereby the chassis (20) of the machining device (2) is moved with respect to the elementary panel (1G, 1D) in the horizontal reference direction (Xr) so as to remove a thickness from at least one face (F1, F2) of the elementary panel (1G, 1D).

10. Machining process according to claim 9, wherein at least one face of the elementary panel (1G, 1D) is covered with a cladding (11) and the machining device (2) is moved with respect to the elementary panel (1G, 1D) in the horizontal reference direction (Xr) so as to machine the cladding (11).

11. Machining process according to one of the claims 9 and 10, the process comprising a friction stir welding step of two elementary panes (1G, 1D) after machining operations.
